# EUROPÄISCHE PATENTANMELDUNG

(11) **EP 0 984 172 A2**
(43) Veröffentlichungstag der Anmeldung: **08.03.2000**
(21) Anmeldenummer: 99117174.5
(22) Anmeldetag: 01.09.1999
(51) Int. Cl.: F16B 5/00, A47F 7/04

(54) **Verbinder für vorzugsweise horizontal angeordnete Bauelemente**

(30) Priorität: 05.09.1998 DE 19840644
(71) Anmelder: Winkler, Karl, 48249 Dülmen (DE)
(72) Erfinder: Winkler, Karl, 48249 Dülmen (DE)
(74) Vertreter: Habbel, Hans-Georg, Dipl.-Ing.

(57) **Zusammenfassung**

Die Erfindung bezieht sich auf einen Verbinder für vorzugsweise horizontale Bauelemente und deren Anschluß an ein vertikales Tragsystem, wobei ein dem Anschluß an das vertikale Tragsystem dienendes Anschlußteil und ein von diesem getragenes Einsteckteil vorgesehen ist, wobei die Höhe des Anschlußteiles etwa der halben Stärke des anzuschließenden Bauelementes entspricht und das Einsteckteil mittig in das anzuschließende Bauelement einsetzbar ist und das Anschlußteil gegenüber der Mittelebene des Bauelementes und der Mittelebene des Einsteckteiles nach außen zur Oberfläche oder Unterfläche des Bauelementes hin verkröpft ist.

## Beschreibung

Die Erfindung bezieht sich auf einen Verbinder für vorzugsweise horizontale und an ein vertikales Tragsystem anschließbare Bauelemente gemäß dem Oberbegriff des Hauptanspruches.

Bei dem Anschluß an ein vertikales Tragsystem stellt sich bei horizontalen, plattenförmigen Bauelementen, die beispielsweise aus Faserholz oder holzartigem Werkstoff bestehen, das Problem, daß der Verbinder mittig innerhalb der Platte angeordnet sein soll, d. h. wenn die Platte beispielsweise eine Stärke von 16 mm aufweist und der Verbinder eine Stärke von 6 mm, sollte auf beiden Seiten des in das Holz hineinragenden Verbinders noch eine Plattenstärke von 4 bis 5 mm vorhanden sein, um derart eine ausreichende Tragfähigkeit für die Platte zu erreichen (s. Katalog Hettich 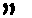 Technik und Anwendung").

Werden zwei horizontale Bauelemente an das vertikale Tragsystem angeschlossen, wird im Stand der Technik ein sogenannter 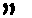 "Doppeldübel" eingesetzt, der die beiden Bauelemente und das vertikale Tragsystem miteinander verbindet. Schwenkbewegungen der beiden Bauteile um eine gemeinsame Achse sind dabei aber nicht möglich. Auch sind sogenannte 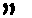 Enddübel" bekannt, die den Anschluß nur eines Bauelementes an das vertikale Tragsystem dienen. Eine wahlweise Kombination von 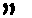 Enddübel", um damit zwei Bauelemente anzuschließen, ist nicht bekannt.

Der Erfindung liegt die Aufgabe zugrunde, ein System zum Verbinden von horizontalen Bauelementen mittels eines Verbinders zu schaffen, dessen Einsteckteil mittig in das eine Bauteil eingreift, wobei aber auch die Möglichkeit bestehen soll, an das vertikale Tragelement zwei Verbinder anzuschließen, so daß beispielsweise die Platten sich zu beiden Seiten des Tragsystems erstrecken oder auch rechtwinklig zueinander angeordnet sind, aber die Platten genau dieselbe Höhe aufweisen.

Diese der Erfindung zugrundeliegende Aufgabe wird durch die Lehre des Hauptanspruches gelöst

Vorteilhafte Ausgestaltungen der Erfindung sind in den Unteransprüchen erläutert.

Mit anderen Worten ausgedrückt wird ein Verbinder vorgeschlagen, der aus einem Einsteckteil und einem Anschlußteil besteht, wobei das Einsteckteil dazu bestimmt ist, in die anzuschließende Platte eingesetzt zu werden und das Anschlußteil dazu bestimmt ist, an das vertikale Tragsystem angeschlossen zu werden. Um den Anschluß von zwei solcher Verbinder an das vertikale Tragsystem zu ermöglichen und dabei sicherzustellen, daß die von den Verbindern getragenen Platten die gleiche Höhe aufweisen, ist gemäß der Erfindung das eigentliche Anschlußteil gegenüber dem Einsteckteil verkröpft, und zwar im wesentlichen um das halbe Maß der Stärke der anzuschließenden Platte. Hierdurch wird erreicht, daß im Bereich des vertikalen Tragsystems zwei Anschlußteile übereinander liegen können, trotzdem die beiden mit diesen Anschlußteilen verbundenen Einsteckteile mittig in die angeschlossenen Platten eingesetzt werden können, wobei die Platten die gleiche Höhe aufweisen, d. h. die Außenflächen der Platten in gleicher horizontaler Linie liegen. Schwenkbewegungen der beiden Bauteile zueinander sind daher möglich.

Das Anschlußteil weist eine Bohrung zur Aufnahme von Elementen des vertikalen Tragsystems auf, wobei natürlich auch so vorgegangen werden kann, daß nicht eine Bohrung vorgesehen wird, sondern eine einseitige Öffnung, die bei entsprechender Ausrichtung des Verbinders so um das vertikale Tragsystem liegt, daß ein Entfernen nicht möglich ist. Das vertikale Tragsystem dient dabei gleichzeitig als Achse.

Um z. B. mit der erfindungsgemäßen Einrichtung auch Türen usw. anschließen zu können, ist vorgesehen, daß wenigstens das Anschlußteil mit einer gleitfähigen Beschichtung versehen ist.

In die in den anzuschließenden plattenförmigen Bauelementen vorgesehene Bohrung, die das Einsteckteil des Verbinders aufnimmt, können hülsenartige Einsatzteile eingesetzt werden, die vorzugsweise aus Metall, aber auch aus Kunststoff bestehen können und die einerseits eine gute Lastverteilung des Verbinders innerhalb der Aufnahmebohrung gewährleisten, andererseits ein Auswechseln ermöglichen, ohne daß die Aufnahmeöffnung in dem Bauelement beschädigt wird.

Weiterhin wird gemäß der Erfindung eine obere und eine untere Abdeckkappe vorgesehen, die das Anschlußteil nach außen hin abdeckt, wobei diese Abdeckkappen unterschiedliche Stärken aufweisen können, so daß damit unterschiedliche Stärken der Bauelemente, also der anzuschließenden plattenförmigen Bauteile, ausgeglichen werden können. Außerdem verhindern diese Abdeckkappen die Ansicht auf die metallischen Anschlußteile, erfüllen also zusätzlich eine ästhetische Aufgabe.

Der erfindungsgemäße Verbinder ermöglicht auch, daß zwei Systeme gegeneinander verschwenkt werden können, indem sie um eine vertikale Verbindung an den beiden Anschlußteilen verstellt werden.

Ausführungsbeispiele der Erfindung werden nachfolgend anhand der Zeichnungen erläutert. Die Zeichnungen zeigen dabei in
- Fig. 1: schaubildlich einen Verbinder gemäß der Erfindung, in
- Fig. 2: den Anschluß von zwei Bauelementen über zwei Verbinder an ein nicht dargestelltes vertikales Tragsystem, in
- Fig. 3: eine Draufsicht auf einen eingesetzten Verbinder, der als Eckverbinder vorgesehen ist und damit als Drehgelenk eingesetzt werden kann und in
- Fig. 4: schematisch zwei gegeneinander verschwenkbare Systeme.

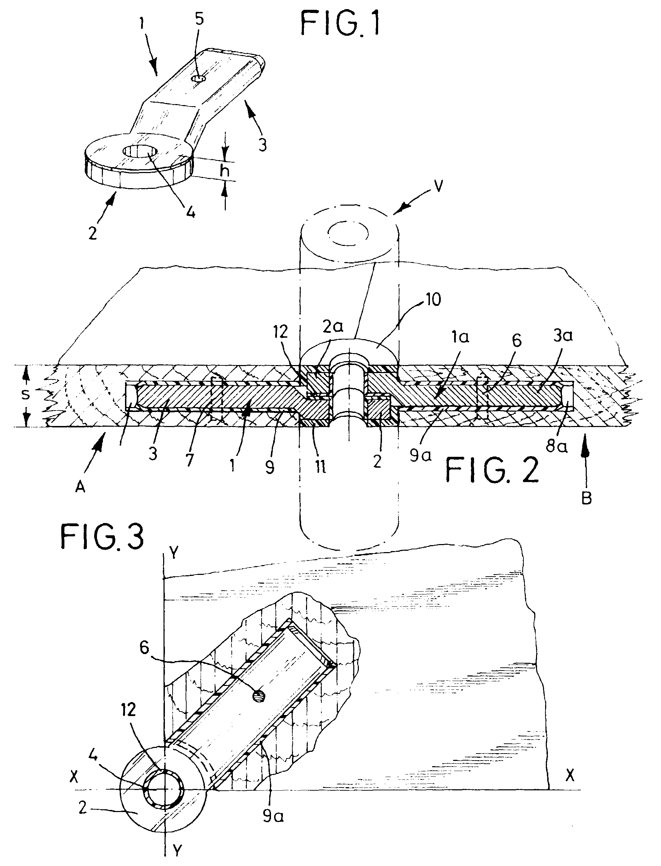

In Fig. 1 ist ein Verbinder 1 dargestellt, der ein Anschlußteil 2 und ein Einsteckteil 3 aufweist. Das Anschlußteil 2 weist eine Bohrung 4 auf, mit der der Verbinder 1 an ein vertikales Tragsystem V oder eine sonstige Schwenkachse angeschlossen werden kann und weiterhin eine Bohrung 5, mit der das Einsteckteil 3 in dem dieses aufnehmende Bauelement A oder B durch eine Befestigungsschraube 6 bzw. 7 festgelegt werden kann.

Das Anschlußteil 2 weist dabei eine Höhe h auf die etwa der halben Stärke s der anzuschließenden Bauelemente A und B entspricht.

Aus Fig. 1 ist deutlich zu ersehen, daß das Anschlußteil 2 gegenüber der Mittelebene des Einsteckteiles 3 verkröpft ist, und zwar bei dem dargestellten Ausführungsbeispiel nach unten, während in der Darstellung gemäß Fig. 2 das Anschlußteil 2a des Verbinders 1a gegenüber der Mittelebene des Einsteckteiles 3a nach oben verkröpft ist. Die Festlegung der Einsteckteile 3 und 3a innerhalb der Bauelemente A und B erfolgt durch in Fig. 2 erkennbare Schrauben 6 und 7, die durch die entsprechende Bohrung 5 des jeweiligen Einsteckteiles 3 reicht.

Aus Fig. 2 ist weiterhin ersichtlich, daß die Anschlußteile 2 und 2a mit einer Beschichtung 12 aus gleitfähigem Material versehen sein können, so daß nicht Metallteile aufeinander reiben, wenn die Anschlußteile 2a, 2b gegeneinander gedreht werden, sondern hier eine reibungslose Bewegung möglich ist.

Bei dem dargestellten Ausführungsbeispiel, insbesondere gemäß Fig. 2, beträgt die Stärke der Bauelemente A und B beispielsweise 16 mm, die Einsteckteile 3 und 3a weisen eine Stärke von 6 mm auf

Insbesondere Fig. 2 zeigt, daß in die in den Bauelementen A und B erforderliche Aufnahmeöffnung 8 bzw. 8a ein hülsenartiges Einsatzteil 9 bzw. 9a eingesetzt ist, das vorzugsweise aus Metall besteht, aber auch aus Kunststoff bestehen kann. Hierdurch wird einerseits ein einfaches Einsetzen der Einsteckteile möglich, andererseits wird ein Beschädigen der Bauelemente A und B in diesem Bereich vermieden, so daß auch ein Auswechseln der Verbinder möglich ist.

Außerdem zeigt Fig. 2, daß die Anschlußteile nach außen hin durch eine obere Abdeckkappe 10 und eine untere Abdeckkappe 11 abgedeckt werden können. Diese Abdeckkappen haben einerseits die Aufgabe, die Ansicht auf die metallischen Verbinder zu vermeiden, andererseits ist es durch unterschiedlich hohe Abdeckkappen 10 bzw. 11 möglich, unterschiedliche Plattenstärken trotz einheitlicher Verbinder auszugleichen.

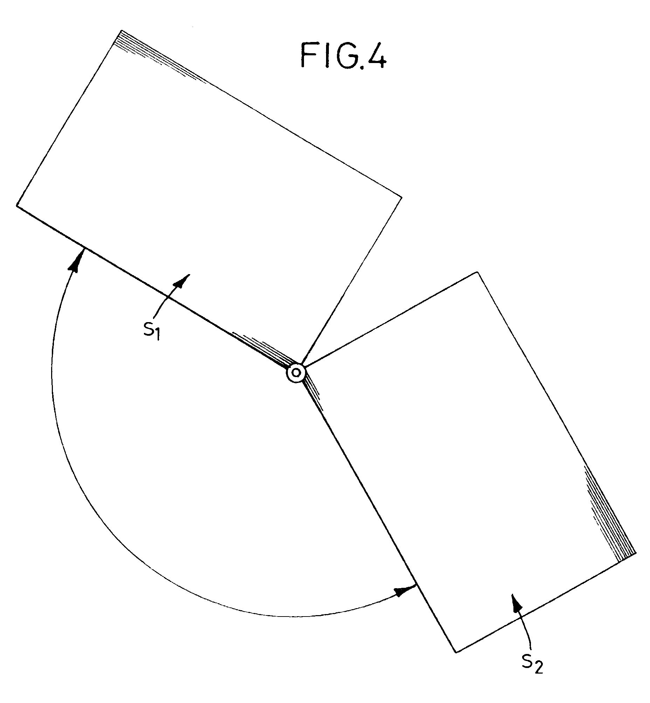

Schließlich zeigt Fig. 4, daß der erfindungsgemäße Verbinder die Möglichkeit gibt, zwei Systeme S₁ und S₂ zwar aneinander anzuschließen, aber gegeneinander zu verschwenken. In einem solchen Fall können die beiden Verbinder an ein vertikales Tragsystem V anschließen oder in die Bohrung 4 der beiden miteinander zusammenwirkenden Verbinder 1 wird ein Drehbolzen eingesetzt, der sowohl die Verschwenkbarkeit wie auch die feste Zuordnung der beiden Systeme S₁ und S₂ gewährleistet.

Wird gemäß Fig. 3 der Verbinder 1 auf die Ecke des anzuschließenden Bauelementes eingesetzt, so befindet sich der Mittelpunkt der Bohrung 4 in der Kreuzungsstelle der in Fig. 3 eingezeichneten X- und Y-Achsen, so daß damit eine Verschwenkbarkeit des einen Elementes gegenüber dem anderen Element um 180° ermöglicht wird.

## Patentansprüche

1. Verbinder für horizontale Bauelemente (A, B) zum Anschluß an ein vertikales Tragsystem mit einem dem Anschluß an das vertikale Tragsystem dienendes Anschlußteil (2) und einem mit diesem verbundenen Einsteckteil (3), wobei die Höhe (h) des Anschlußteiles (2) etwa der halben Stärke (s) des anzuschließenden Bauelementes (A, B) entspricht und das Einsteckteil (3) mittig in das anzuschließende Bauelement (A, B) einsetzbar ist, dadurch gekennzeichnet, daß das Anschlußteil (2) gegenüber der Mittelebene des Bauelementes (A, B) und der Mittelebene des Einsteckteiles (3) nach außen zur Außenfläche des Bauelementes (A, B) hin verkröpft ist.

2. Verbinder nach Anspruch 1, dadurch gekennzeichnet, daß das Anschlußteil (2) eine Bohrung (4) zur Aufnahme von Befestigungselementen aufweist.

3. Verbinder nach Anspruch 1 oder 2, dadurch gekennzeichnet, daß wenigstens das Anschlußteil (2) mit einem gleitfähigen Überzug versehen ist.

4. Verbinder nach Anspruch 1 oder 2, dadurch gekennzeichnet, daß in die Aufnahmeöffnung (8, 8a) der Bauelemente (A, B) ein hülsenartiges Einsatzteil (9, 9a) eingesetzt ist.

5. Verbinder nach Anspruch 4, dadurch gekennzeichnet, daß das hülsenartige Einsatzteil (9, 9a) aus Metall besteht.

6. Verbinder nach einem der vorhergehenden Ansprüche, gekennzeichnet durch eine obere und untere Abdeckkappe (10, 11), die das Anschlußteil (2, 2a) nach außen hin abschließt.
